Europäisches Patentamt

European Patent Office

Office européen des brevets

(11) Publication number: **0 346 063**
**A2**

# EUROPEAN PATENT APPLICATION

(21) Application number: **89305681.2**

(51) Int. Cl.⁴: **G11B 11/10**

(22) Date of filing: **06.06.89**

(30) Priority: **09.06.88 JP 140594/88**

(43) Date of publication of application:
**13.12.89 Bulletin 89/50**

(84) Designated Contracting States:
**DE FR GB**

(71) Applicant: **CANON KABUSHIKI KAISHA
30-2, 3-chome, Shimomaruko
Ohta-ku Tokyo(JP)**

(72) Inventor: **Aizawa, Takayuki
H-205, Higashi Terao Hiruzu 85, 1-15,Higashi
Terao
Tsurumi-ku Yokohama-shi
Kanagawa-ken(JP)**

(74) Representative: **Beresford, Keith Denis Lewis
et al
BERESFORD & Co. 2-5 Warwick Court High
Holborn
London WC1R 5DJ(GB)**

(54) **Magneto-optical information recording method and apparatus.**

(57) This specification discloses a magneto-optical information recording and erasing method comprising the step of scanning tracks on a magneto-optical recording medium by a light beam emitted from an optical head while applying a bias magnetic field in a predetermined direction to the medium, and effecting one of the recording and erasing of information, the step of moving the optical head to a desired position across the tracks and at the same time, reversing the direction of application of the bias magnetic field, and the step of scanning the tracks on the medium from the desired position by the light beam emitted from the optical head while applying a bias magnetic field in the reversed direction to the medium, and effecting the other of the recording and erasing of the information. The specification also discloses a magneto-optical information recording apparatus for carrying out such method.

## Magneto-optical Information Recording Method and Apparatus

BACKGROUND OF THE INVENTION

Field of the Invention

This invention relates to a method and an apparatus in which tracks on a magneto-optical recording medium are scanned by a light beam emitted from an optical head while a bias magnetic field is applied to the medium, whereby recording and erasing of information are selectively effected.

Related Background Art

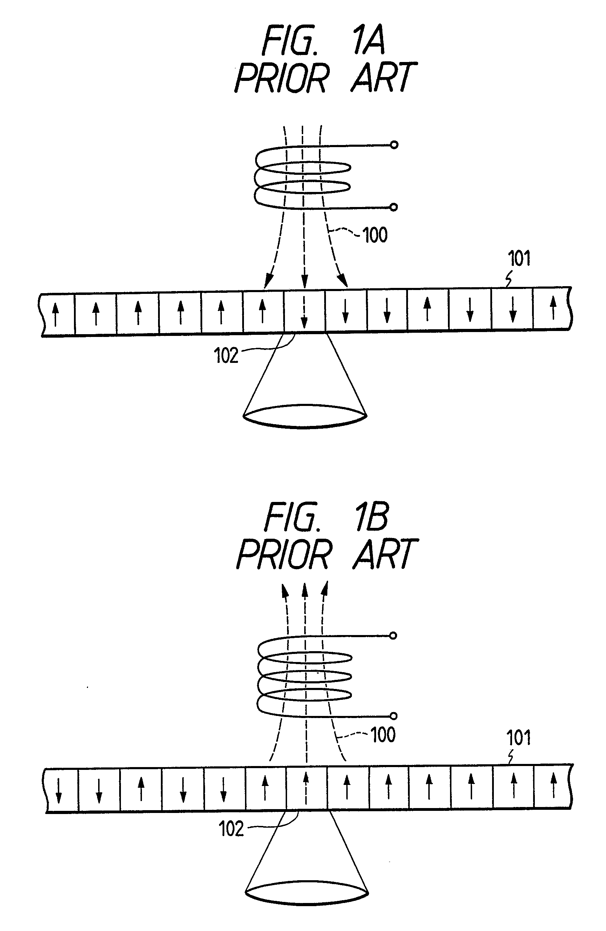

In a magneto-optical information recording apparatus as described above (hereinafter, a magneto-optical disc apparatus will be described as an example), as shown in Figure 1A of the accompanying drawings, the direction of vertical magnetization in a recording medium 101 is controlled by the interaction of an external magnetic field 100 and a light spot 102, and recording of information is effected by the utilization of the fact that the vertical magnetization changes in the direction of the external magnetic field only at the location irradiated with the light spot 102. On the other hand, when different information is to be superposedly written on a location on which information is already recorded, erasing of the information must be done in advance for the purpose of making the direction of vertical magnetization in the recording medium definite. The then direction of the external magnetic field, as shown in Figure 1B of the accompanying drawings, is opposite to that during recording. Also, this external magnetic field is usually cut for the purposes of reducing the consumed power and preventing the rise of the internal temperature except during the recording or erasing of information. Thus, the external magnetic field of the magneto-optical disc apparatus has the following three kinds of states:

(1) a state in which the external magnetic field is OFF ..... hereinafter referred to as the reproducing mode (not shown);

(2) a state in which the external magnetic field is ON and the direction of that magnetic field is downward ...... hereinafter referred to as the recording mode (see Figure 1A); and

(3) a state in which the external magnetic field is ON and the direction of that magnetic field is upward ...... hereinafter referred to as the erasing mode (see Figure 1B).

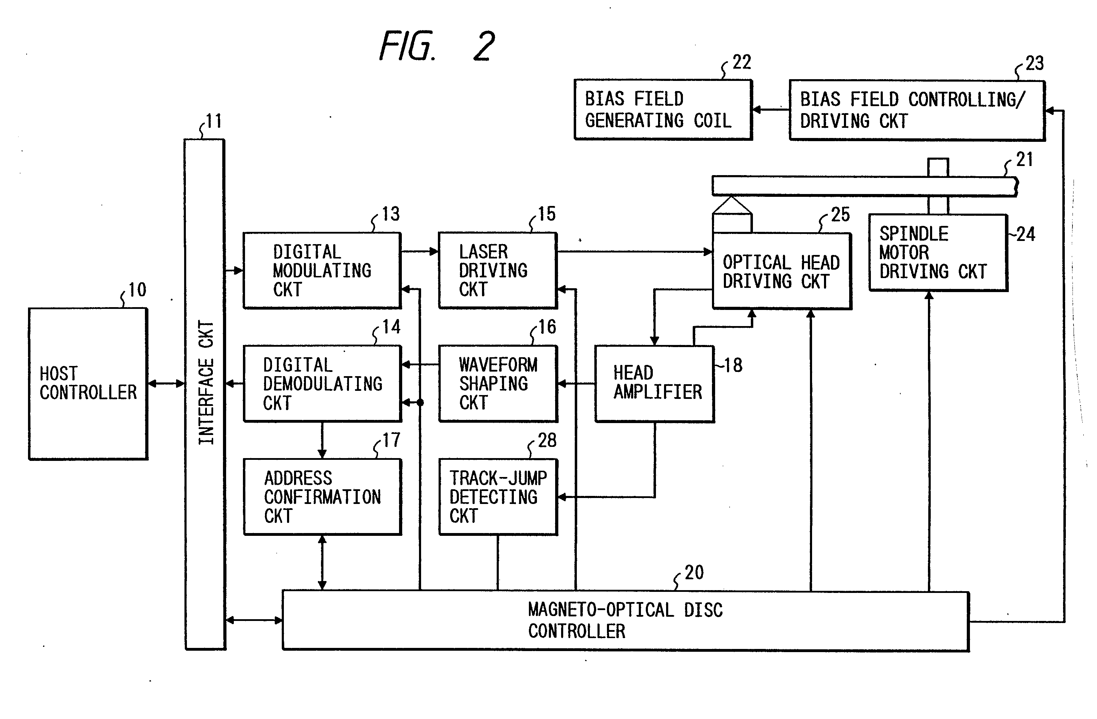

Figure 2 of the accompanying drawings shows a schematic block diagram of a magneto-optical disc apparatus according to the prior art and the host controller thereof.

In Figure 2, the reference numeral 10 designates a host controller which is a host apparatus, the reference numeral 11 denotes an interface circuit which connects the host controller 10 to a drive device, the reference numeral 13 designates a digital modulating circuit for modulating an information signal in a predetermined modulation system, the reference numeral 15 denotes a laser driving circuit, the reference numeral 25 designates an optical head and a driving circuit therefor, the reference numeral 21 denotes a disc-like magneto-optical recording medium, the reference numeral 24 designates a spindle motor for rotating the recording medium 21 and a driving circuit therefor, the reference numeral 22 denotes a coil for producing a bias magnetic field, and the reference numeral 23 designates a bias magnetic field controlling and driving circuit. The reference numeral 18 denotes a head amplifier for amplifying a signal from the optical head 25, the reference numeral 16 designates a waveform shaping circuit for shaping the waveform of a signal from the head amplifier 18, the reference numeral 14 denotes a digital demodulating circuit, the reference numeral 17 designates an address confirmation circuit, the reference numeral 20 denotes a magneto-optical disc controller, and the reference numeral 28 designates a track-jump detecting circuit.

The control of the basic operation of the magneto-optical disc apparatus is a well-known technique and therefore, detailed description of the various circuits is omitted herein.

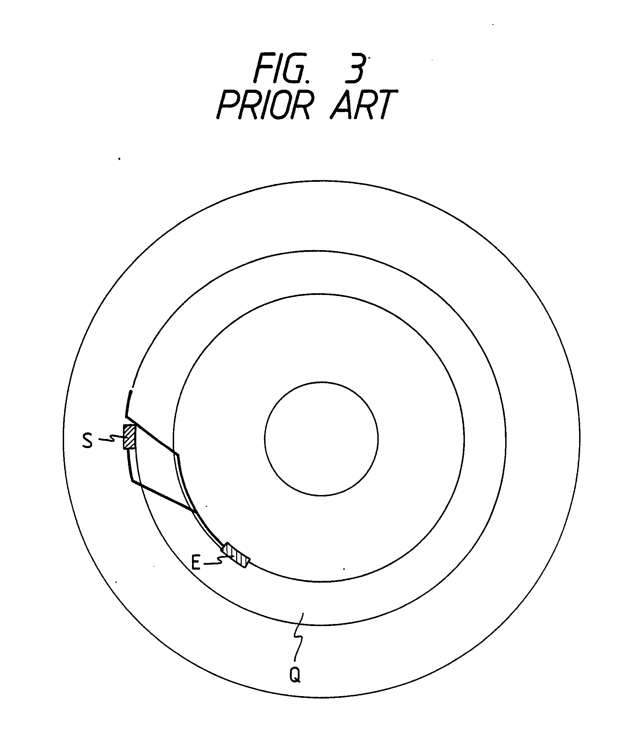

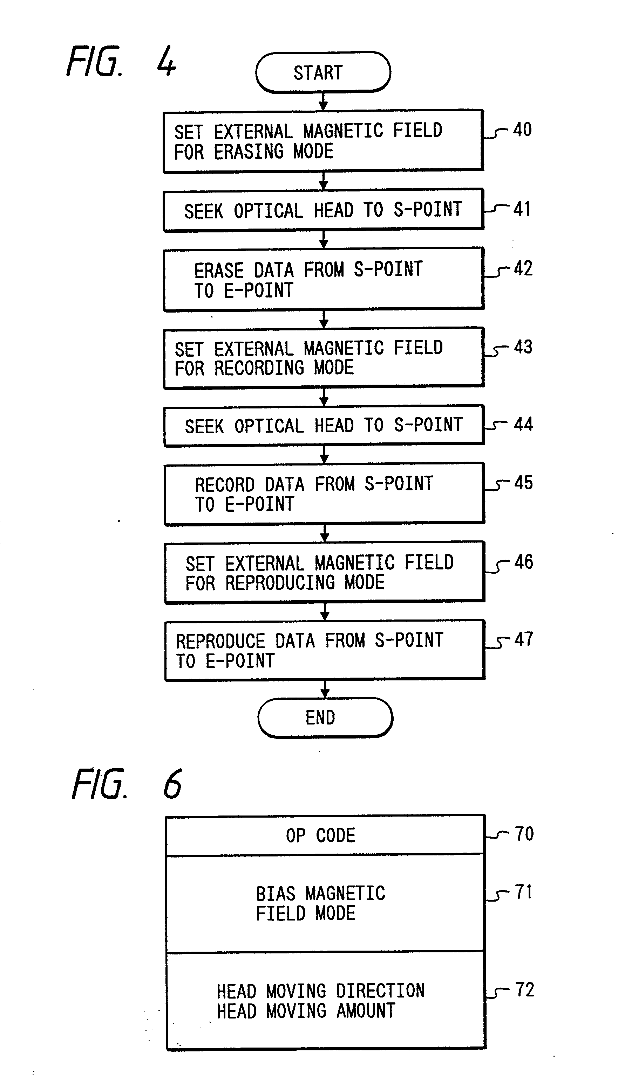

Figure 4 of the accompanying drawings shows the sequence in which recording of information is effected on the area Q of the recording medium of Figure 3 by the magneto-optical disc apparatus of the construction of Figure 2.

In Figure 3, S designates a recording starting point and E denotes a recording termination point.

The controller 20 renders the bias magnetic field into the erasing mode by the command of the host controller 10 through the interface circuit 11, and changes over it to the erasing mode in accordance with the command of the bias magnetic field (the step 40 of Figure 4), and thereafter seeks the optical head 25 to the recording starting point S by the command of the host controller 10 (step 41). It erases the data of the area from the S-point to the E-point (step 42), and thereafter renders the bias magnetic field into the recording mode in accordance with the command of the host controller 10 to effect the recording of the data (step 43), whereafter it moves the optical head 25 again to the S-point (step 44), and effects the recording of the data (step 45). After the recording of the data, it renders the bias magnetic field into the reproducing mode with a view to confirm that the data has been recorded properly (step 46), and reproduces the data of the area from the S-point to the E-point (step 47).

With such a construction, the host controller 10 executes the movement of the optical head 25 after the change-over of the bias magnetic field is completed and therefore, the processing time required for the changeover of the bias magnetic field and the movement of the optical head becomes long. This leads to the disadvantage that the probability with which the rotation of the medium 21 is waited for when the head is moved from the E-point to the S-point and shift is made to the next process (for example, during the time from after the step 42 of Figure 4 is completed until the process of step 45 is started) becomes high.

The magneto-optical disc controller 20 receives a command from the host controller 10 through the interface circuit 11 and effects the control of the various portions of the magneto-optical disc apparatus (the drive device) such as the movement of the optical head 25 and the change-over of the bias magnetic field. When the optical head driving circuit 25 is to be controlled for the movement of the optical -head, the controller 20 controls the optical head driving circuit while detecting from the signal of the track-jump detecting circuit 28 that the optical head has track-jumped. Accordingly, in a controller of ordinary processing ability, control of the other portions cannot be accomplished and therefore, the operation of eliminating the above-noted disadvantage cannot be performed.

## SUMMARY OF THE INVENTION

It is an object of the present invention to solve the above-noted problem peculiar to the prior art and to provide a magneto-optical information recording method and a magneto-optical information recording apparatus which can shorten the time necessary to effect the erasing and recording of information.

The above object of the present invention is achieved by a magneto-optical information recording and erasing method comprising:
the step of scanning tracks on a magneto-optical recording medium by a light beam emitted from an optical head while applying a bias magnetic field in a predetermined direction to the medium, and effecting one of the recording and erasing of information;
the step of moving said optical head to a desired position across said tracks and at the same time, reversing the direction of application of said bias magnetic field; and
the step of scanning the tracks on said medium from said desired position by the light beam emitted from said optical head while applying a bias magnetic field in the reversed direction to said medium, and effecting the other of the recording and erasing of the information.

Also, a magneto-optical information recording apparatus for carrying out the above-described method comprises:
an optical head for scanning tracks on a magneto-optical recording medium by a light beam and selectively effecting the recording and erasing of information;
means for moving said optical head across said tracks;
means for applying a bias magnetic field to said medium;
a first controller for reversing the direction of application of said bias magnetic field during recording and during erasing; and
a second controller for controlling the movement of said optical head.

## BRIEF DESCRIPTION OF THE DRAWINGS

Figures 1A and 1B are schematic views for illustrating the principles of the recording and erasing of information using a magneto-optical recording medium.

Figure 2 is a block diagram showing an example of the magneto-optical disc apparatus according to the prior art.

Figure 3 is a plan view of a magneto-optical disc.

Figure 4 is a flow chart showing the operation of the magneto-optical disc apparatus according to the prior art.

Figure 5 is a block diagram showing an embodiment of the magneto-optical disc apparatus of the present invention.

Figure 6 is a schematic view showing the construction of a command for instructing the change-over of a bias magnetic field and the movement of a head.

Figure 7 is a flow chart showing the parallel process of the change-over of the bias magnetic field and the movement of the head by a controller.

Figure 8 is a flow chart showing an example of the operation of a host controller for the magneto-optical disc apparatus.

## DESCRIPTION OF THE PREFERRED EMBODIMENT

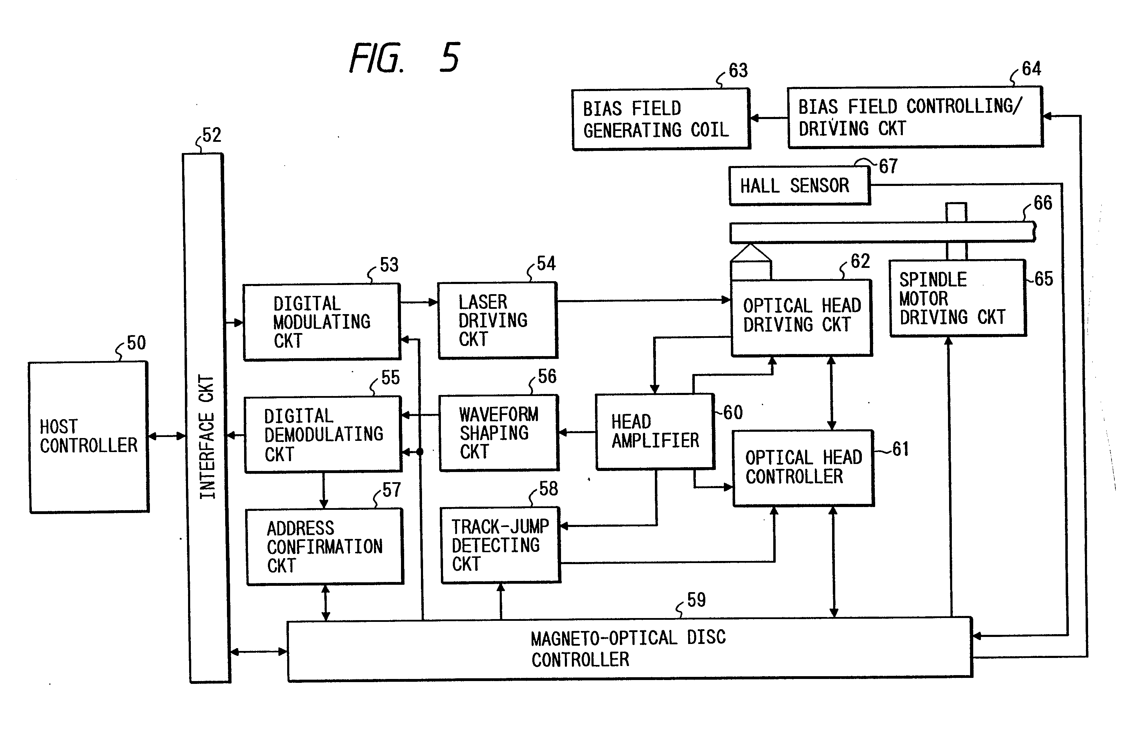

Figure 5 is a block diagram schematically showing a construction in which the present invention is applied to a magneto-optical disc apparatus.

In Figure 5, the reference numeral 50 designates a host controller which is a host apparatus, the reference numeral 52 denotes an interface circuit, the reference numeral 53 designates a digital modulating circuit for modulating an information signal in a predetermined modulation system, the reference numeral 54 denotes a laser driving circuit, the reference numeral 62 designates an optical head and a driving circuit therefor, the reference numeral 66 denotes a disc-like magneto-optical recording medium, the reference numeral 65 designates a spindle motor for rotating the recording medium 66 and a driving circuit therefor, the reference numeral 63 denotes a coil for producing a bias magnetic field, the reference numeral 64 designates a bias magnetic field controlling and driving circuit, and the reference numeral 67 denotes a ball sensor. The reference numeral 60 designates a head amplifier for applifying a signal from the optical head 62, the reference numeral 56 denotes a waveform shaping circuit for shaping the waveform of a signal from the head amplifier 60, the reference numeral 55 designates a digital demodulating circuit, the reference numeral 57 denotes an address confirmation circuit, the reference numeral 59 designates a magneto-optical disc controller, and the reference numeral 61 denotes an optical head controller for controlling the optical head. The optical head controller 61 executes the movement of the optical head 62 while monitoring the signals from a track-jump detecting circuit 58 and the head amplifier 60 by a command from the magneto-optical disc controller 59.

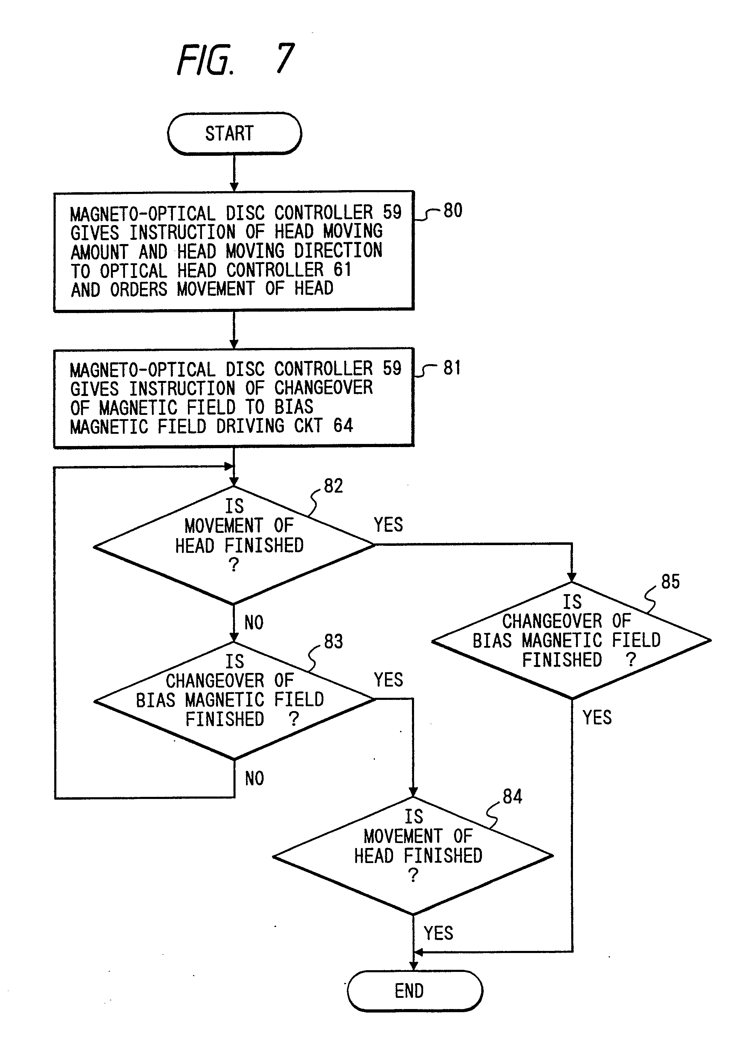

Description will now be made of the parallel operations of the change-over of the bias magnetic field and the movement of the optical head which are the features of the present invention in the construction of Figure 5. A flow chart of these operations is shown in Figure 7.

The host controller 50 gives the magneto-optical disc controller 59 a command for movement of the optical head and a command for change of the external bias magnetic field in the form of a command of code information. This command, as shown in Figure 6, is comprised of an OP code 70, a code 71 indicative of each mode of the aforedescribed bias magnetic field and a code 72 indicative of the direction and amount of movement of the head. Upon receiving said command, the magneto-optical disc controller 59 gives instructions to the optical head controller 61 as to the amount and direction of movement of the head (step 80) and at the same time, instructs the bias magnetic field driving circuit 64 to change over the bias magnetic field (step 81). Upon receiving the instructions for movement of the optical head, the optical head controller 61 monitors and controls the optical head driving circuit 62, the head amplifier 60 and the track-jump detecting circuit 58, and moves the optical head as instructed, and after the completion of the movement, it sends a completion signal to the magneto-optical disc controller 59.

After the output of the ball sensor 67 reaches a certain level and the completion of the change of the mode of the bias magnetic field is confirmed (steps 83 and 85) and the completion signal of the optical head controller 60 is confirmed (steps 82 and 84), the magneto-optical disc controller 59 sends the host controller 50 a command execution signal indicative of the completion of the movement of the optical head and the completion of the change-over of the bias magnetic field, thus completing the command.

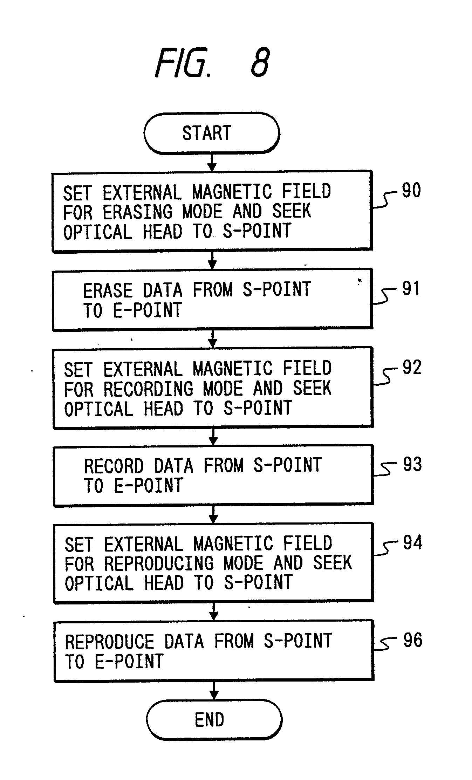

In the operation described above, the sequence in which, for example, by the magneto-optical disc apparatus of Figure 5, recording of information is effected on the area Q of the recording medium of Figure 3 by the use of a command is shown in Figure 8. In Figure 3, S designates a recording starting point and E denotes a recording termination point.

The host controller 50 renders the bias magnetic field into the erasing mode by the use of the compound command of Figure 6 and moves the head to the S-point (the step 90 of Figure 8). After the completion of the erasing of the data from the S-point to the E-point (step 91), the host controller renders the bias magnetic field into the recording mode to effect the recording of data and moves the head to the S-point (step 92). After the completion of the recording of the data from the S-point to the E-point (step 93), the host controller renders the bias magnetic field into the reproducing mode to effect the reproduction of data with a view to confirm that the data has been recorded properly and moves the head to the S-point (step 94). The data from the S-point to the E-point is reproduced, thus completing the operation.

In the flow of Figure 8, the change-over of the magnetic field and the movement of the optical head are executed by the compound command of Figure 6 (the processes of steps 90, 92 and 94) and the magneto-optical disc apparatus of Figure 5 executes the movement of the optical head and the change-over of the bias magnetic field in parallel by the compound command of Figure 6 and therefore, the process time of the steps 90, 92 and 94 of Figure 8 becomes shorter and when the head is moved from the E-point to the S-point and shift is made to the next process (for example, shift is made from the step 92 to the step 93 of Figure 8), the probability of waiting for the rotation of the disc is reduced. Also, the host controller 50 uses the compound command of Figure 6 and therefore, when the change-over of the bias magnetic field and the movement of the optical head are to be executed, a command has been output twice in the prior art, whereas in the present invention, a command need only be output once.

If in the construction of Figure 5, the processing ability of the magneto-optical disc controller 59 is made sufficiently great, it will be possible not to provide the optical head controller 61, but for the magneto-optical disc controller 59 itself to perform also the function of the optical head controller. Generally, however, it is more advantageous in respect of cost to newly provide an optical head controller 61 of the order of 8 bits than to use a CPU having such a great processing ability.

The present invention is not restricted to the above-described embodiment, but other various applications thereof are possible. For example, the magneto-optical recording medium is not limited to the form of a disc, but may be in any form such as a card-like form or a tape-like form. The present invention covers all such examples of application without desparting from the scope thereof as defined in the appended claims.

## Claims

1. A magneto-optical information recording and erasing method comprising:
the step of scanning tracks on a magneto-optical recording medium by a light beam emitted from an optical head while applying a bias magnetic field in a predetermined direction to the medium, and effecting one of the recording and erasing of information;
the step of moving said optical head to a desired position across said tracks and at the same time, reversing the direction of application of said bias magnetic field; and
the step of scanning the tracks on said medium from said desired position by the light beam emitted from said optical head while applying a bias magnetic field in the reversed direction to said medium, and effecting the other of the recording and erasing of the information.

2. A magneto-optical information recording apparatus comprising:
an optical head for scanning tracks on a magneto-optical recording medium by a light beam and selectively effecting the recording and erasing of information;
means for moving said optical head across said tracks;
means for applying a bias magnetic field to said medium;
a first controller for reversing the direction of application of said bias magnetic field during recording and during erasing; and
a second controller for controlling the movement of said optical head.

3. A magneto-optical information recording apparatus according to Claim 2, further comprising a host controller for sending said first and second controllers a command signal indicative of the direction of application of the bias magnetic field and the direction and amount of movement of said optical head.

4. A magneto-optical information recording apparatus according to Claim 2, wherein said first controller instructs said second controller to move said optical head.

5. A magneto-optical information recording apparatus according to Claim 3, wherein said second controller sends a termination signal to said first controller when the movement of said optical head is terminated.

6. A magneto-optical information recording apparatus according to Claim 2, further comprising a Hall sensor and wherein said first controller confirms the reversal of the direction of application of the bias magnetic field by the output of said Hall sensor.

# FIG. 1A
# PRIOR ART

~100

101

102

# FIG. 1B
# PRIOR ART

~100

101

102

FIG. 2

EP 0 346 063 A2

FIG. 3
PRIOR ART

*FIG. 4*

START

SET EXTERNAL MAGNETIC FIELD FOR ERASING MODE — 40

SEEK OPTICAL HEAD TO S-POINT — 41

ERASE DATA FROM S-POINT TO E-POINT — 42

SET EXTERNAL MAGNETIC FIELD FOR RECORDING MODE — 43

SEEK OPTICAL HEAD TO S-POINT — 44

RECORD DATA FROM S-POINT TO E-POINT — 45

SET EXTERNAL MAGNETIC FIELD FOR REPRODUCING MODE — 46

REPRODUCE DATA FROM S-POINT TO E-POINT — 47

END

*FIG. 6*

OP CODE — 70

BIAS MAGNETIC FIELD MODE — 71

HEAD MOVING DIRECTION HEAD MOVING AMOUNT — 72

## FIG. 5

FIG. 5

- 63 — BIAS FIELD GENERATING COIL
- 64 — BIAS FIELD CONTROLLING/ DRIVING CKT
- 67 — HALL SENSOR
- 66
- 65 — SPINDLE MOTOR DRIVING CKT
- 52 — INTERFACE CKT
- 50 — HOST CONTROLLER
- 53 — DIGITAL MODULATING CKT
- 54 — LASER DRIVING CKT
- 62 — OPTICAL HEAD DRIVING CKT
- 55 — DIGITAL DEMODULATING CKT
- 56 — WAVEFORM SHAPING CKT
- 60 — HEAD AMPLIFIER
- 61 — OPTICAL HEAD CONTROLLER
- 57 — ADDRESS CONFIRMATION CKT
- 58 — TRACK-JUMP DETECTING CKT
- 59 — MAGNETO-OPTICAL DISC CONTROLLER

EP 0 346 063 A2

# FIG. 7

START

↓

**80** — MAGNETO-OPTICAL DISC CONTROLLER 59 GIVES INSTRUCTION OF HEAD MOVING AMOUNT AND HEAD MOVING DIRECTION TO OPTICAL HEAD CONTROLLER 61 AND ORDERS MOVEMENT OF HEAD

↓

**81** — MAGNETO-OPTICAL DISC CONTROLLER 59 GIVES INSTRUCTION OF CHANGEOVER OF MAGNETIC FIELD TO BIAS MAGNETIC FIELD DRIVING CKT 64

↓

**82** — IS MOVEMENT OF HEAD FINISHED ?

YES → **85** — IS CHANGEOVER OF BIAS MAGNETIC FIELD FINISHED ?

NO ↓

**83** — IS CHANGEOVER OF BIAS MAGNETIC FIELD FINISHED ?

NO (loops back)

YES → **84** — IS MOVEMENT OF HEAD FINISHED ?

YES (from 85) ↓

YES (from 84) ↓

END

# FIG. 8

```
            ┌─────────────┐
            │    START    │
            └─────────────┘
                   │
                   ▼
┌──────────────────────────────────┐
│ SET EXTERNAL MAGNETIC FIELD      │  ⌐ 90
│ FOR ERASING MODE AND SEEK        │
│ OPTICAL HEAD TO S-POINT          │
└──────────────────────────────────┘
                   │
                   ▼
┌──────────────────────────────────┐
│ ERASE DATA FROM S-POINT          │  ⌐ 91
│ TO E-POINT                       │
└──────────────────────────────────┘
                   │
                   ▼
┌──────────────────────────────────┐
│ SET EXTERNAL MAGNETIC FIELD      │  ⌐ 92
│ FOR RECORDING MODE AND SEEK      │
│ OPTICAL HEAD TO S-POINT          │
└──────────────────────────────────┘
                   │
                   ▼
┌──────────────────────────────────┐
│ RECORD DATA FROM S-POINT         │  ⌐ 93
│ TO E-POINT                       │
└──────────────────────────────────┘
                   │
                   ▼
┌──────────────────────────────────┐
│ SET EXTERNAL MAGNETIC FIELD      │  ⌐ 94
│ FOR REPRODUCING MODE AND SEEK    │
│ OPTICAL HEAD TO S-POINT          │
└──────────────────────────────────┘
                   │
                   ▼
┌──────────────────────────────────┐
│ REPRODUCE DATA FROM S-POINT      │  ⌐ 96
│ TO E-POINT                       │
└──────────────────────────────────┘
                   │
                   ▼
            ┌─────────────┐
            │     END     │
            └─────────────┘
```